# FASCICULE DE BREVET EUROPEEN

(11) **EP 3 947 118 B1**
(45) Date de publication et mention de la délivrance du brevet: **13.08.2025**
(21) Numéro de dépôt: 20709232.1
(22) Date de dépôt: 12.03.2020
(51) Int. Cl.: B62D 55/075, B62D 55/253

(54) **CHENILLES MOTRICES ET ROBOT NETTOYEUR POUR PANNEAUX SOLAIRES COMPRENANT DE TELLES CHENILLES**
ANTRIEBSSCHIENEN UND SOLARZELLEN-REINIGUNGSROBOTER MIT SOLCHEN SCHIENEN
DRIVE TRACKS AND SOLAR PANEL CLEANING ROBOT COMPRISING SUCH TRACKS

(30) Priorité: 29.03.2019 LU 101166
(43) Date de publication de la demande: 09.02.2022
(73) Titulaire: Solarcleano S.à r.l., 4959 Bascharage (LU)
(72) Inventeur: TIMMERMANS, Christophe, Garnich (LU)
(74) Mandataire: Office Freylinger
(86) Numéro de dépôt international: PCT/EP2020/056736
(87) Numéro de publication internationale: WO 2020/200694

(56) Documents cités:
- WO-A1-2014/005495
- WO-A1-2019/024739
- WO-A1-2020/200694
- US-A- 4 378 133
- US-A1- 2011 240 382

## Description

### Domaine technique

La présente invention concerne généralement le domaine des véhicules à chenilles conçus pour évoluer sur des plans inclinés tels que des panneaux photovoltaïques.

### Etat de la technique

Le développement des énergies renouvelables prend un essor de plus en plus important. Nombre d'ensembles de panneaux solaires sont installés aujourd'hui, que ce soit dans des centrales solaires photovoltaïques ou sur des toitures industrielles.

Il est important de pouvoir nettoyer la surface de ces panneaux solaires afin de garantir leur efficacité.

Le nettoyage peut se faire manuellement, par exemple par des opérateurs à l'aide de perches.

Des robots nettoyeurs à brosses ont également été développés. Une des difficultés du nettoyage est liée au fait que les panneaux solaires sont généralement inclinés, et mouillés lors du nettoyage. Le fabricant du robot doit ainsi pouvoir garantir l'adhérence des robots nettoyeurs sur des pentes supérieures à 10° ou 25°.

A ce jour on connaît des robots à ventouses, une adaptation du robot nettoyeur de tours vitrées. Son adhérence sur de fortes pentes est excellente, mais le coût est onéreux.

On connait également des robots nettoyeurs (WO2014/005495) équipés d'une paire de chenilles motrices qui peuvent comprendre une couche extérieure de roulement en caoutchouc structuré ou en cuir. On observe en pratique deux difficultés avec les chenilles connues. Tout d'abord, si les panneaux sont généralement plans, la structure support des panneaux forme des irrégularités de surfaces (notamment des saillies liés aux cadres et vis) qui tendant à décoller les chenilles et réduisent donc l'adhérence des chenilles sur la surface. De plus, ces vis et saillies métalliques risquent d'endommager les chenilles et l'allocation du poids du robot de façon inégale sur une surface plus petite risque d'endommager les panneaux en créant ou agrandissant les microfissures liées à une trop grande pression sur le panneau.

### Objet de l'invention

La présente invention a pour objet de fournir des chenilles motrices pour robot nettoyeur, et un robot équipé de telle chenilles permettant une bonne adhérence sur les surfaces inclinées telles que des panneaux solaires, notamment en présence d'irrégularités de surface formées par des cadres, vis etc.

### Description générale de l'invention

Pour atteindre cet objectif, l'invention propose une chenille motrice pour véhicule évoluant sur des surfaces inclinées, qui présente une structure multicouches comprenant :
- une couche intérieure formée par une bande continue ayant une face intérieure apte à coopérer avec des moyens d'entrainement de la chenille ;
- une couche intermédiaire comportant une pluralité de blocs amortisseurs disposés sur toute la longueur de la bande continue de la couche interne avec un espacement prédéfini, les blocs amortisseurs étant réalisés en matériau élastomère et présentant une structure alvéolaire ; de préférence la structure alvéolaire est formée par une pluralité de canaux parallèles traversants ;
- une couche extérieure de roulement venant en contact de la surface sur laquelle elle évolue, la couche de roulement étant formée par des patins portés par les blocs souples.

On appréciera que les blocs amortisseurs prévus dans la chenille selon l'invention permettent, grâce à la structure alvéolaire, de doser l'amortissement et donc l'écrasement individuel des blocs. Il est ainsi possible d'absorber des déformations locales de la surface sur laquelle le robot évolue, sans provoquer un décollement global de la chenille, car la déformation se provoque au niveau du bloc. L'adhérence est ainsi améliorée. La souplesse, ou l'amorti, de la couche intermédiaire contribue également à une meilleure répartition des charges. En outre, la couche intermédiaire permet une certaine souplesse entre la couche interne et la couche extérieure qui facilite la rotation lors d'un virage du robot.

Outre le bon comportement mécanique des chenilles décrites ci-dessus, l'usage d'un élastomère, en combinaison avec la structure alvéolaire, confère une bonne résistance/ténacité de la couche intermédiaire, notamment sur des arêtes coupantes de cadres métalliques, de vis, etc... Des essais ont notamment montré que le choix d'un élastomère avec une dureté appropriée confère une durée de service à la chenille nettement supérieure à celle d'une chenille dans laquelle la couche intermédiaire est une mousse polymère du type néoprène par exemple.

Des essais réalisés avec les chenilles selon l'invention ont permis de confirmer la bonne adhérence d'un robot nettoyeur sur des plans inclinés mouillés jusqu'à des angles d'inclinaison supérieur à 25°.

Selon des modes de réalisation, les blocs amortisseurs ont une forme générale de parallélépipède, en particulier parallélépipède droit. En pratique, chaque bloc a ainsi une largeur, une longueur et une épaisseur. Chaque bloc amortisseur supporte, sur une face parallèle à la bande de la couche interne, un patin. Un tel patin est par exemple sensiblement rectangulaire et sa largeur correspond à la largeur de la bande continue de la couche interne.

Les blocs sont de préférence dimensionnés pour que leur largeur corresponde à la largeur de la bande, la longueur du bloc étant donc sa dimension dans le sens de la longueur de la bande (même si elle est inférieure à la largeur). Les canaux formant des alvéoles tubulaires s'étendent de préférence parallèlement, dans le sens de la largeur du bloc, donc transversalement à la longueur de la bande continue, respectivement de la chenille. Ainsi, les faces des blocs s'étendant dans le sens de la longueur de la chenille sont des faces dans lesquelles débouchent les canaux.

En outre, la structure alvéolaire est préférablement du type nid d'abeilles.

La fixation des patins sur les blocs amortisseurs et des blocs amortisseurs à la bande continue se fait avantageusement par collage, mais tout moyen approprié pourra être utilisé.

Les blocs amortisseurs et les patins sont réalisés en élastomères, par exemple en caoutchouc naturel ou synthétique. Pour les blocs amortisseurs ou pourra notamment utiliser l'EPDM et pour les patins le caoutchouc naturel. La dureté de l'élastomère des blocs amortisseurs et supérieure à celle des patins. En particulier, la dureté de l'élastomère choisi pour les blocs amortisseur est préférablement comprise entre 60 et 80 degrés Shore A, de préférence entre 65 et 70 degrés Shore A. Les patins sont préférablement réalisés en élastomère présentant une dureté de l'ordre de 35 à 50 degrés Shore A, en particulier entre 40 et 45 degrés Shore A.

L'espacement entre les blocs amortisseurs permet leur déformation. Cet espacement prédéterminé (e) peut correspondre à minimum 5 % ou 20 % l'épaisseur (d3) d'un bloc, de préférence au minimum 30, 40 ou 50% de l'épaisseur d'un bloc.

Avantageusement, les patins ont une surface de contact avec une pluralité de cavités ouvertes sur la surface de contact et formant un motif prédéterminé, le taux de cavités surfacique étant inférieur à 50%. Les cavités ont une double fonction d'évacuation de l'eau et d'adhérence.

Les cavités sont typiquement formées dans l'épaisseur du patin et délimitées par une surface de paroi et une surface de fond, chaque surface de paroi coupant la face de contact selon un contour d'arête fermé. Par exemple, les cavités ont une profondeur de 2 mm ou plus et l'aire définie par le contour d'arête fermé est comprise entre 12 et 80 mm², de préférence entre 16 et 36 mm².

Selon un autre aspect, l'invention concerne un robot, en particulier pour le nettoyage de surfaces inclinées, comprenant :
- un châssis supportant un groupe de propulsion ;
- une paire de chenilles de traction conformes au premier aspect, montées de part et d'autre du châssis pour le déplacement du robot, les chenilles étant supportées et entrainées par des moyens d'entrainement de la chenille coopérant avec le groupe de propulsion ; et
- au moins une brosse pour le nettoyage de la surface sur laquelle évolue le robot.

Selon des variantes, le robot comprend deux brosses de nettoyage rotatives, montées transversalement à l'axe de déplacement du robot, une brosse à chaque extrémité du robot ; et des moyens d'entrainement des brosses conçus pour entrainer les brosses dans deux sens.

Selon des variantes, le châssis forme un cadre support pour un panier, le panier comprenant un module de commande du robot ainsi que des batteries destinées à alimenter l'ensemble des équipements embarqués, notamment le module de commande, le groupe de propulsion et les moyens d'entrainement des brosses.

La ou les brosses de nettoyage sont avantageusement montées sur le châssis par des moyens de fixation amovibles, et le panier est logé de manière amovible dans le châssis.

La pression exercée par le robot sur les panneaux photovoltaïques dépend de la masse du robot et de la surface de contact. Dans le contexte du présent robot, le nombre de patins de la chenille, leurs dimensions et taux de cavités surfacique sont déterminés de sorte que la pression appliquée par les patins sur les panneaux est inférieure à environ 5 000 Pa, en particulier inférieure à environ 4 200 Pa.

### Description détaillée à l'aide des figures

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
- Figure 1 :: une vue en perspective d'un robot nettoyeur équipé d'une paire de chenilles motrices selon une variante de l'invention ;
- Figure 2 :: une vue en perspective d'une des chenilles motrices de la Fig.1 ;
- Figure 3 :: une vue illustrant le principe de construction de la chenille de la Fig.1 ;
- Figure 4 :: une vue en perspective d'un bloc amortisseur ;
- Figure 5 :: une vue latérale d'un bloc amortisseur ;
- Figure 6 :: une vue explosée du robot de la figure 1 ;
- Figure 7 :: deux vues de dessus : a) patin équipant la chenille de la Fig.2, b) autre profil de patin ; et
- Figure 8 :: vue de dessus d'une télécommande pour le robot de la figure 1.

La présente invention sera maintenant décrite sur base d'un exemple d'application aux robots nettoyeurs de panneaux solaires tels que des panneaux photovoltaïques.

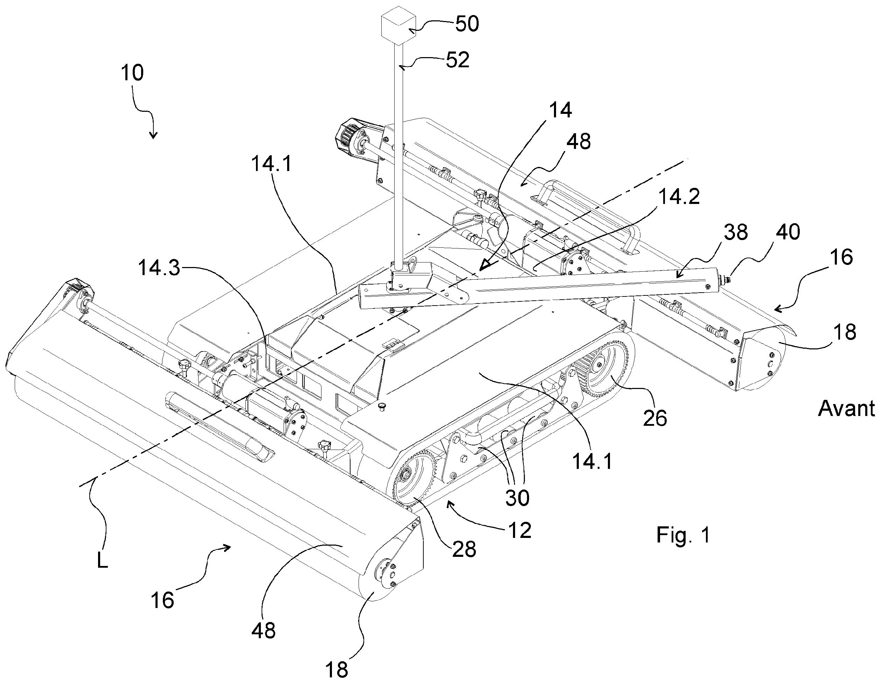

La figure 1 montre une vue en perspective d'un robot 10 nettoyeur de panneaux solaires (non représentés) équipé d'une paire de chenilles motrices 12 selon un mode de réalisation de l'invention.

Le robot 10 comprend un châssis 14 supportant un groupe de propulsion. Les chenilles de traction 12 sont montées de part et d'autre du châssis 14 pour le déplacement du robot 10, les chenilles 12 étant supportées et entrainées par des moyens d'entrainement de chenille coopérant avec le groupe de propulsion.

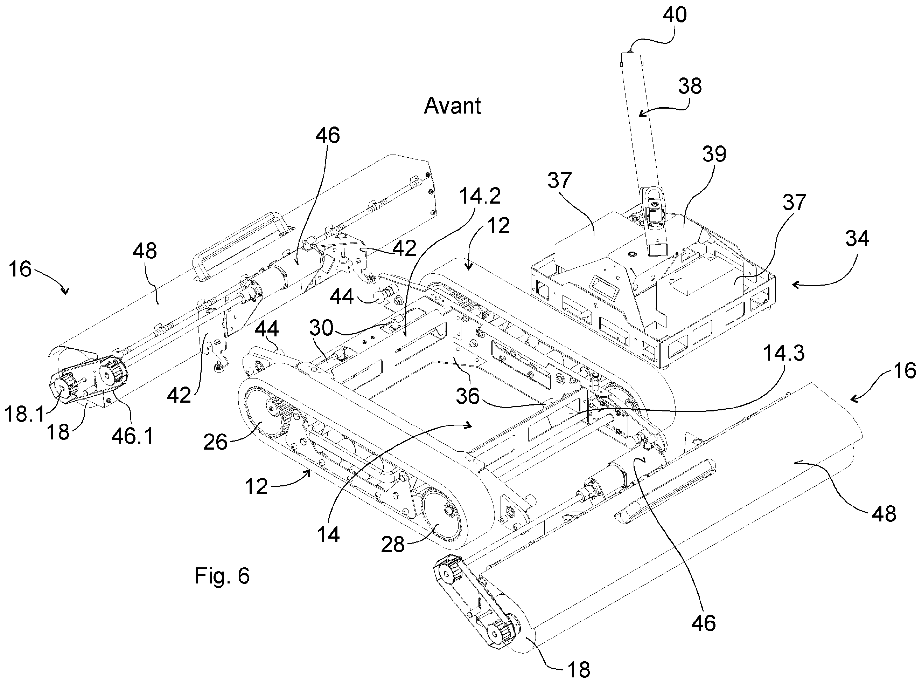

Le châssis 14 a une forme globalement rectangulaire avec 4 côtés : deux côtés latéraux 14.1 et deux côté transversaux dont un avant 14.2 et un arrière 14.3. Selon la présente variante, les quatre côtés sont formés par des profilés formant un cadre et un support pour un panier (montré en Fig.6). Sur la Fig.1 on a représenté l'axe longitudinal robot, désigné L, selon lequel il se déplacement au moyen des chenilles.

Deux modules-brosses 16 sont montés sur les côtés transversaux 14.2 et 14.3. Ils comprennent chacun une brosse 18 (représentée schématiquement par un cylindre) s'étendant perpendiculairement à l'axe L et au-delà des bords latéraux du châssis 14 équipé des chenilles 12.

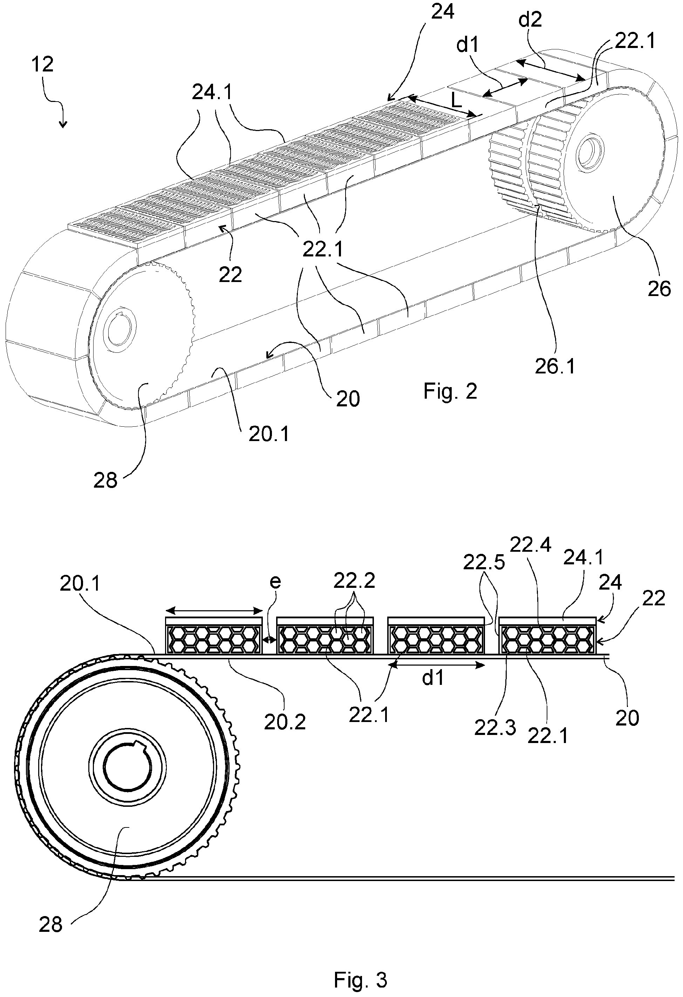

Comme on le voit mieux à la figure 2, la chenille 12 comporte trois couches.

Une couche intérieure 20 est formée par une bande continue ayant une face intérieure 20.1 apte à coopérer avec les moyens d'entrainement de la chenille. La bande continue 20 est préférablement fabriquée sans fin (d'une pièce) dans un matériau élastique, tel qu'un élastomère avec armature, à la manière d'une courroie. Sur sa face intérieure 20.1 la bande continue présente avantageusement un relief (non montré) destiné à améliorer l'entrainement sur les poulies des moyens d'entrainement.

Le signe de référence 24 désigne généralement une couche extérieure de roulement venant en contact de la surface sur laquelle la chenille, respectivement le robot, évolue. Cette couche extérieure est formée d'une pluralité de patins 24.1.

La chenille 12 comprend encore une couche intermédiaire 22 de liaison entre les couches interne 20 et extérieure 24, formée par une pluralité de blocs amortisseurs 22.1 disposés sur toute la longueur de la bande 20 de couche interne, du côté de sa face extérieure 20.2 opposée à la face intérieure 20.1. Chaque bloc souple 22.1 a une forme parallélépipédique, et supporte, sur une face parallèle à la bande de la couche interne, un patin 24.1. Les blocs 22.1 sont liés par une seule face à la bande 20 et ne sont pas liés entre eux, c'est-à-dire qu'ils sont espacés dans la direction longitudinale de la bande 20.

On désigne d1 la dimension d'un bloc 22.1 dans le sens de la bande 20 (parallèlement à l'axe L), d2 la largeur du bloc qui correspond à la largeur de la bande 20, et d3 l'épaisseur du bloc.

On peut par exemple avoir : d1 : 55 à 75 mm ; d2 : 80 à 120 mm ; et d3 : 15 à 30 mm.

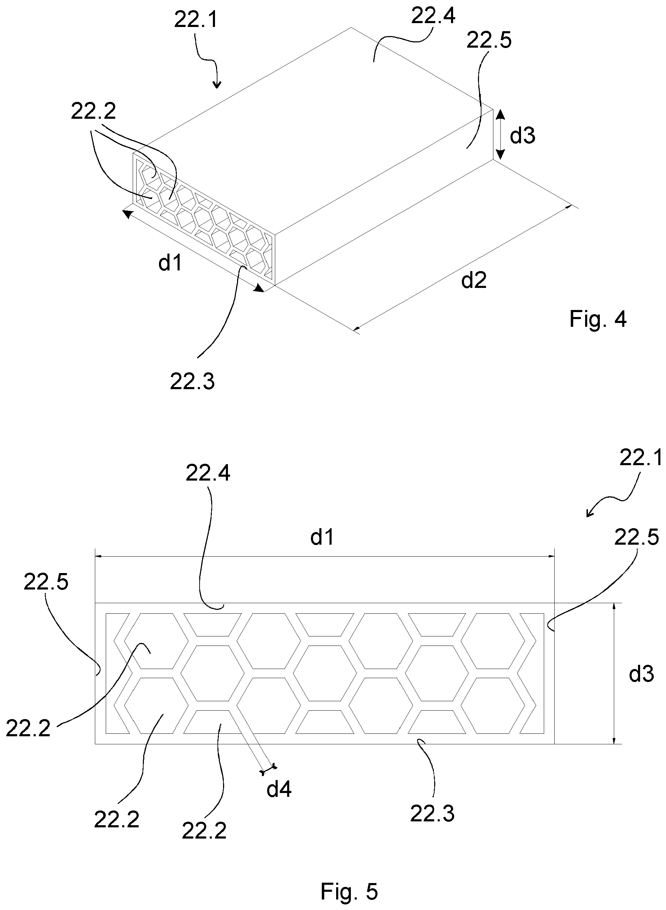

On remarquera particulièrement la conception des blocs amortisseurs 22.1 qui sont réalisés en matériau élastomère et présentent une structure alvéolaire avec une pluralité de canaux 22.2 parallèles traversants. Comme on le comprendra mieux des figures 3 à 5, les blocs 22.1 comprennent quatre parois parallèles, et l'on distingue : une paroi intérieure 22.3 en contact avec la surface extérieure 20.1 de la bande 20, une paroi extérieure 22.4 portant un patin 24.1, et deux parois latérales 22.5 joignant ces deux parois. Les parois pleines 22.3, 22.4 et 22.5 définissent donc un volume intérieur qui accueille les canaux 22.2. Les canaux sont dits traversants, car ils s'étendent sur toute la largeur d2 du bloc ; ils débouchent par conséquent dans les faces d'extrémités des blocs 22.1 coïncidant avec les bords de la bande 20. Dans la présente variante, les canaux 22.2 sont réalisés pour former une structure alvéolaire du type nid d'abeille, c'est-à-dire avec des canaux à section hexagonale. L'épaisseur de paroi des canaux 22.2, notée d4, peut être, à titre d'exemple, de l'ordre de 1 à 3 mm, en particulier 1,5 ou 2 mm.

Les blocs 22.1 sont agencés sur toute la longueur de la bande 20 avec un espacement prédéterminé entre eux, noté e en Fig.3. Cet espacement prédéterminé correspond à minimum 5% ou 20% l'épaisseur d3 d'un bloc, de préférence au minimum 40 ou 50% de l'épaisseur d3 d'un bloc. Cela donne un peu d'espace qui permet la déformation du bloc, notamment des parois latérales 22.5, sous la pression du robot et/ou au contact des rugosités des panneaux solaires.

La structuration en blocs de la couche intermédiaire 22, combinée à la souplesse, permet une déformation locale sur les irrégularités de surface (vis, cadre, etc.) qui évite que l'ensemble de la chenille ne se détache de la surface. Cette conception en blocs est donc favorable à l'absorption des formes et vibrations, ainsi qu'à la répartition des charges et à l'amortissement. Il en résulte donc une adhérence améliorée. En outre, la couche intermédiaire 22 permet une certaine souplesse entre la couche interne 20 et les patins 24.1 de la couche extérieure 24 qui facilite la rotation des patins sur eux-mêmes sur quelques degrés lors d'un virage du robot.

Les blocs 22.1 sont réalisés en matière élastomère ; tout élastomère approprié peut être employé, caoutchouc naturel ou synthétique. Le caoutchouc EDPM est avantageusement choisi pour sa bonne résistance aux altérations atmosphériques et agents de lavage. L'élastomère utilisé pour les blocs 22.1 a préférablement une dureté comprise entre 60 et 80 degrés Shore A, en particulier entre 65 et 70 degrés Shore A.

On notera que sur la Figure 2 seuls quelques patins 24.1 sont représentés, mais en pratique chaque bloc amortisseur 22.1 de la couche intermédiaire 24 porte un patin 24.1.

Dans la présente variante, les moyens d'entrainement des chenilles 12 comprennent, de part et d'autre du robot 10, une poulie d'entrainement 26 et une poulie de retour 28. Ces poulies 26, 28 ont des profils sur leur surface extérieure qui coopèrent avec le profil de la surface intérieure 20.1 de la courroie 20, pour une bonne transmission de la force motrice. Une nervure centrale de guidage (non montrée) s'étend sur la face interne 20.1 de la courroie et s'engage dans une gorge centrale aménagée dans chacune des poulies ou galets des moyens d'entrainement et support de chenille. La gorge centrale 26.1 de la poulie d'entrainement 26 est visible en Fig.2.

Des galets de roulement 30 sont prévus en partie inférieure, entre les deux poulies 26 et 28, venant égaliser la pression sur la surface à nettoyer.. Ces galets comprennent également une gorge centrale pour la nervure centrale de guidage et des guides de courroies sont installées de part et d'autre de ces galets.

A titre d'exemple, la chenille 12 peut avoir une longueur totale (dimension de la courroie formant la couche intérieure) de l'ordre de 1200 mm à 2400 mm, en particulier de 1800 à 2000 mm. La largeur de la courroie peut être de 70 à 130 mm, par exemple 100 mm. Les poulies 26 et 28 peuvent avoir des diamètres entre 80 et 200 mm, par exemple entre 120 et 150 mm.

On se réfèrera maintenant à la Fig.6. Le groupe de propulsion comprend deux moteurs électriques 32 montés sur le profilé avant 14.2 du châssis 14. Chacun des moteurs 32 est couplé, généralement via un réducteur (non montré), à une poulie d'entrainement 26 respective. Le châssis 14 forme un cadre support pour un panier 34 qui vient se loger dans l'espace défini par les profilés 14.1 à 14.3 et repose sur des plats d'angle 36. Le panier contient un module de commande du robot 10 ainsi que des batteries 37 d'alimentation du robot 10, qui fournissent l'énergie électrique pour l'ensemble des équipements embarqués, dont le module de commande, les moteurs de propulsion et les moteurs des modules brosses 16.

Le panier 34 porte encore le système d'alimentation d'eau qui comprend un bras 38 pivotant sur 360°. Le bras pivotant 38 comprend un tube dont l'extrémité, côté pivot, est en communication avec une valve 39 pour distribuer l'eau vers les deux brosses. L'autre extrémité du tube du bras pivotant 38 comprend un raccord 40 qui permet sa connexion à un tuyau flexible d'alimentation d'eau.

On remarquera sur la Fig.6 que le robot 10 est conçu en quatre parties : le châssis 14, le panier 34 et les deux modules-brosse 16. Cet aspect modulaire permet un transport aisé du robot, à l'état démonté, par un seul utilisateur. Il peut par exemple porter les différentes parties du robot de manière individuelle sur une échelle, pour assembler le robot sur une toiture équipée de panneaux solaires. Cela évite le recours à un engin de levage.

Le panier 34 se loge dans le châssis 14 et y est fixé au moyen d'un système de verrou (non montré), par exemple des goupilles de verrouillage à blocage axial venant s'engager dans le panier 34. Les moteurs de propulsion 30 sont reliés électriquement au module de commande par des câbles à connecteurs étanches. Les deux modules-brosse 16 ont chacun des éléments de fixation 42 qui coopèrent avec des éléments 44 correspondant sur le châssis 14, de manière à former une fixation amovible. Comme on le voit ici, des équerres 42 à gorge viennent s'engager, par pivotement, sur des axes 44. Ceci n'est qu'un exemple et d'autre types de fixations amovibles sont envisageables.

Chaque brosse 18 est couplée à un moteur électrique 46 respectif, typiquement au moyen d'une courroie dentée entrainant un pignon 46.1 sur l'axe du moteur et un pignon 18.1 sur l'axe de la brosse 18. Un capot 48 protège des projections vers le haut.

Une fois les modules-brosses 16 montés sur le châssis, on raccorde électriquement les moteurs 46 au module de commande par des câbles avec connecteurs étanches. On positionne également un tuyau d'alimentation relié avec l'électrovanne39 de sorte à déboucher au niveau de chacune des brosses 18.

On notera encore la présence d'une caméra 50, fixée au bout d'un mat 52 monté sur le panier 34. La caméra 50 permet de visualiser l'ensemble du robot sur la surface sur laquelle il évolue ou de faire des images thermographiques de la centrale photovoltaïque.

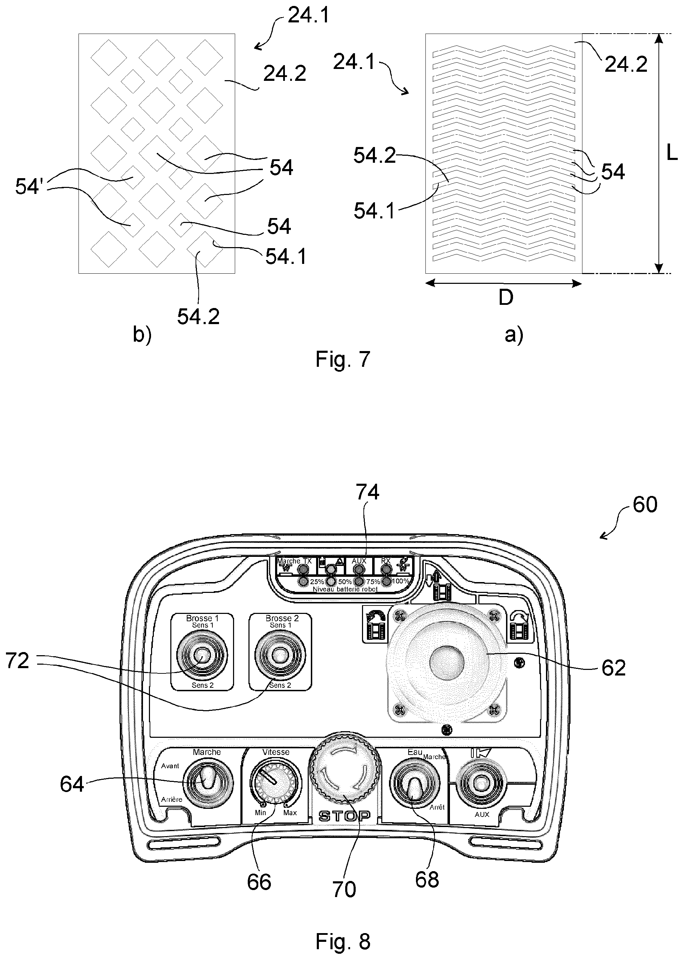

La Figure 7 présente des vues de dessus de deux variantes de patins 24.1 ayant une surface de contact 24.2 avec une pluralité de cavités 54 (ou creux) ouvertes sur la surface de contact 24.2 et formant un motif prédéterminé.

Les patins 24.1 ont une forme rectangulaire correspondant sensiblement à la section des blocs, c'est-à-dire une dimension D dans le sens de la bande correspondant à d1 et une dimension L dans la direction transversale correspondant à d2.

Les cavités 54 sont formées dans l'épaisseur du patin et délimitées par une surface de paroi 54.1 définissant la périphérie de la cavité (perpendiculaire au plan de la surface de contact 24.2) et une surface de fond 54.2 (parallèle au plan de la surface de contact 24.2). Ainsi, la cavité délimitée par chaque surface de paroi 54.1 coupe la face de contact 24.2 selon un contour d'arête fermé.

Le taux de cavités surfacique est préférablement inférieur à 50%. Par taux de cavités surfacique on entend le rapport entre la somme des aires des cavités (l'aire de chaque cavité est celle définie par le contour d'arête fermé) et la surface totale du patin (L x D).

Les patins 24.1 peuvent être fabriqués en une pièce (typiquement par moulage) ou par assemblage de deux couches. Ils sont réalisés dans un matériau ayant une dureté appropriée pour une bonne adhérence. Dans ce contexte, les patins ont une double fonction d'évacuation eau et de succion. Lorsque les patins reposent à plat sur la surface d'un panneau solaire, la combinaison entre le poids du robot et la forme des cavités permet de chasser l'eau sous les cavités et provoque un effet de succion qui confère une adhérence permettant le maintien du robot.

Dans la variante de la figure 7 a), le motif comprend des cavités 54 en forme de lignes ondulées s'étendant transversalement à la longueur du patin L. Les lignes comprennent 6 segments rectilignes formant 3 périodes. Une fois montés, les lignes sont orientées dans le sens de la longueur de la chenille 12.

Dans la variante de la Fig.7b), les cavités sont disposées selon un motif alterné de cavités carrées. Une ligne de trois carré 54 de côté c1 est suivie par une ligne de deux carrés, notés 54', de côté c2, en quinconce.

Par exemple, les cavités ont une profondeur de 2 mm ou plus et l'aire définie par le contour d'arête fermé est comprise entre 12 et 80 mm², de préférence entre 16 et 36 mm².

Les patins peuvent être fabriqués dans un élastomère, en particulier en caoutchouc naturel, même si les caoutchoucs synthétiques sont envisageables, et ayant préférablement une dureté de l'ordre de 35 à 50degrés Shore A, en particulier entre 40 et 45 degrés Shore A.

Dans la variante, les patins 24.1 sont fixés par leur face arrière sur les blocs respectifs par collage.

De manière similaire, les blocs 22.1 sont fixés à la bande 20 par collage. Toutefois, les blocs et patins peuvent être fixés par tout moyen approprié, ils peuvent également cousus ou fixés de manière amovible (par ex. type crochets et boucles textiles).

Dans la variante présentée, chaque bloc 22.1 est couvert par un patin 22.1. On pourrait toutefois envisager des variantes dans lesquelles un bloc supporte 2 ou plusieurs patins. Par ailleurs, les blocs 22.1 qui sont ici en un seul matériau pourraient être composites, c.-à-d. comporter en assemblage de plusieurs matériaux différents.

Le robot 10 est commandé à distance par un opérateur au moyen d'une télécommande 60 illustrée en Fig.8. La télécommande permet de gérer les fonctions du robot à distance. Elle comprend un circuit électronique à microprocesseur alimenté par batterie associé à un émetteur radio-fréquence communiquant avec un récepteur associé au module de commande embarqué dans le robot. Le panneau de commande de la télécommande comprend notamment :
- levier directionnel 62 pour le déplacement en ligne droite et la rotation du robot ;
- interrupteur 64 inverseur de sens de marche ;
- bouton 66 de réglage de vitesse ;
- interrupteur 68 d'alimentation d'eau ;
- boutons 70 de réglage de rotation des brosses ;
- bouton 72 d'arrêt d'urgence ; et
- bandeau 74 d'indicateurs d'état (LEDs).

## Revendications

1. Chenille motrice pour véhicule évoluant sur des surfaces inclinées, **caractérisée en ce qu'**elle présente une structure multicouches comprenant :
- une couche intérieure (20) formée par une bande continue ayant une face intérieure (20.1) apte à coopérer avec des moyens d'entrainement de la chenille ;
- une couche intermédiaire (22) comportant une pluralité de blocs amortisseurs (22.1) disposés sur toute la longueur de la bande continue de la couche interne avec un espacement (e) prédéfini;
- une couche extérieure (24) de roulement venant en contact de la surface sur laquelle la chenille évolue, la couche de roulement étant formée par des patins (24.1) portés par les blocs amortisseurs (22.1) ;
dans laquelle les blocs amortisseurs sont réalisés en matériau élastomère présentant une dureté comprise entre 60 et 80 degrés Shore A et présentent une structure alvéolaire comprenant une pluralité de canaux (22.2) parallèles traversants.

2. Chenille selon la revendication 1, dans laquelle chaque bloc amortisseur (22.1) a une forme de parallélépipède, et supporte, sur une face parallèle à la bande de la couche interne, un patin (24.1).

3. Chenille selon la revendication 1 ou 2, dans laquelle la structure alvéolaire est du type nid d'abeilles et les canaux (22.2) s'étendent transversalement à la longueur de la bande continue, en particulier perpendiculairement.

4. Chenille selon l'une quelconque des revendications précédentes, dans laquelle ledit espacement prédéterminé (e) correspond à minimum 5% ou 20% l'épaisseur (d3) d'un bloc, de préférence au minimum 40 ou 50% de l'épaisseur d'un bloc.

5. Chenille selon l'une quelconque des revendications précédentes, dans laquelle les blocs amortisseurs (22.1) sont réalisés dans un élastomère présentant une dureté comprise entre 65 et 70 degrés Shore A.

6. Chenille selon l'une quelconque des revendications précédentes, dans laquelle le patin (24.1) est sensiblement rectangulaire et s'étend sur la largeur de la bande continue de la couche interne.

7. Chenille selon l'une quelconque des revendications précédentes, dans laquelle les patins ont une surface de contact avec une pluralité de cavités ouvertes (54) sur la surface de contact et formant un motif prédéterminé, le taux de cavités surfacique étant inférieur à 50%.

8. Chenille selon la revendication 7, dans laquelle les cavités (54) sont formées dans l'épaisseur du patin et délimitées par une surface de paroi (54.1) et une surface de fond (54.2), chaque surface de paroi coupant la face de contact selon un contour d'arête fermé.

9. Chenille selon la revendication 8, dans laquelle les cavités (54) ont une profondeur de 2 mm ou plus et l'aire définie par le contour d'arête fermé est comprise entre 12 et 80 mm², de préférence entre 16 et 36 mm².

10. Chenille selon l'une quelconque des revendications précédentes, dans laquelle les patins (24.1) sont réalisés en élastomère présentant une dureté de l'ordre de 35 à 50 degrés Shore A, en particulier entre 40 et 45 degrés Shore A.

11. Robot, en particulier pour le nettoyage de surfaces inclinées, comprenant :
un châssis (14) supportant un groupe de propulsion ;
une paire de chenilles (12) de traction selon l'une des revendications 1 à 10, montées de part et d'autre du châssis pour le déplacement du robot, les chenilles étant supportées et entrainées par des moyens d'entrainement de la chenille coopérant avec le groupe de propulsion ; et
au moins une brosse (16) pour le nettoyage de la surface sur laquelle évolue le robot.

12. Robot selon la revendication 11, comprenant deux brosses (16) de nettoyage rotatives, montées transversalement à l'axe (L) de déplacement du robot, une brosse à chaque extrémité du robot ; et
des moyens d'entrainement des brosses conçus pour entrainer les brosses dans deux sens.

13. Robot selon la revendication 11 ou 12, dans lequel le châssis (14) forme un cadre support pour un panier (34), le panier comprenant un module de commande du robot (10) ainsi que des batteries (37) destinées à alimenter l'ensemble des équipements embarqués, notamment le module de commande, le groupe de propulsion et les moyens d'entrainement des brosses ; et de préférence dans lequel la ou les brosses de nettoyage sont montées sur le châssis par des moyens de fixation amovibles, et le panier est logé de manière amovible dans le châssis.

14. Robot selon l'une des revendications 11 à 13, dans lequel le nombre de patins de la chenille, leurs dimensions et taux de cavités surfacique sont déterminés de sorte que la pression appliquée par les patins sur les panneaux est inférieure à environ 5 000 Pa, en particulier inférieure à environ 4 200 Pa.

## Patentansprüche

1. Gleiskette für Fahrzeuge, die sich auf geneigten Flächen fortbewegen, **dadurch gekennzeichnet, dass** sie einen Mehrschichtenaufbau hat, der umfasst:
- eine Innenschicht (20), die von einem Endlosgurt mit einer Innenseite (20.1) gebildet wird, die geeignet ist, mit Antriebsmitteln der Gleiskette zusammenzuwirken;
- eine Zwischenschicht (22), die eine Mehrzahl von Dämpfungsklötzen (22.1) umfasst, die auf der ganzen Länge des Endlosgurts der Innenschicht mit einem vorbestimmten Abstand (e) angeordnet sind;
- eine äußere Laufschicht (24), die in Kontakt mit der Fläche kommt, auf der sich die Gleiskette fortbewegt, wobei die Laufschicht von Kufen (24.1) gebildet wird, die von den Dämpfungsklötzen (22.1) getragen werden;
wobei die Dämpfungsklötze aus einem Elastomer bestehen, das einen Shore A-Härtegrad von 60 bis 80 und eine Wabenstruktur mit einer Mehrzahl paralleler, durchgehender Kanäle (22.2) hat.

2. Gleiskette nach Anspruch 1, wobei jeder Dämpfungsklotz (22.1) quaderförmig ist und auf einer zum Gurt der Innenschicht parallelen Seite eine Kufe (24.1) aufweist.

3. Gleiskette nach Anspruch 1 oder 2, wobei die Wabenstruktur eine Struktur nach Art von Honigwaben ist und sich die Kanäle (22.2) quer zur Länge des Endlosgurts, insbesondere lotrecht dazu, erstrecken.

4. Gleiskette nach einem der vorstehenden Ansprüche, wobei der genannte vorbestimmte Abstand (e) mindestens zu 5% oder 20% der Dicke (d3) eines Klotzes entspricht, vorzugsweise mindestens 40 oder 50% der Dicke eines Klotzes.

5. Gleiskette nach einem der vorstehenden Ansprüche, wobei die Dämpfungsklötze (22.1) aus einem Elastomer bestehen, das einen Shore A-Härtegrad von 65 bis 70 aufweist.

6. Gleiskette nach einem der vorstehenden Ansprüche, wobei die Kufe (24.1) im Wesentlichen rechteckig ist und sich über die Breite des Endlosgurts der Innenschicht erstreckt.

7. Gleiskette nach einem der vorstehenden Ansprüche, wobei die Kufen eine Kontaktfläche mit einer Mehrzahl offener Hohlräume (54) auf der Kontaktfläche haben und ein vorbestimmtes Muster bilden, wobei der Anteil von Oberflächenhohlräumen unter 50% liegt.

8. Gleiskette nach Anspruch 7, wobei die Hohlräume (54) in der Dicke der Kufe gebildet sind und von einer Wandfläche (54.1) und einer Bodenfläche (54.2) begrenzt werden, wobei jede Wandfläche die Kontaktseite entlang eines geschlossenen Kantenumrisses schneidet.

9. Gleiskette nach Anspruch 8, wobei die Hohlräume (54) eine Tiefe von 2 mm oder mehr aufweisen und die vom geschlossenen Kantenumriss gebildete Fläche 12 bis 80 mm2, vorzugsweise 16 bis 36 mm2 groß ist.

10. Gleiskette nach einem der vorstehenden Ansprüche, wobei die Kufen (24.1) aus einem Elastomer mit einem Shore A-Härtegrad von 35 bis 50, insbesondere von 40 bis 45, bestehen.

11. Roboter, insbesondere zur Reinigung geneigter Flächen, der umfasst:
ein Chassis (14), das ein Antriebsaggregat trägt;
ein Paar Zug-Gleisketten (12) nach einem der Ansprüche 1 bis 10, die beidseits des Chassis für die Fortbewegung des Roboters montiert sind, wobei die Gleisketten getragen und angetrieben werden von Antriebsmitteln der Gleiskette, die mit dem Antriebsaggregat zusammenwirken; und
mindestens eine Bürste (16) zum Reinigen der Fläche, auf der sich der Roboter bewegt.

12. Roboter nach Anspruch 11, umfassend zwei drehbare Reinigungsbürsten (16), die quer zur Bewegungsachse (L) des Roboters montiert sind, wobei eine Bürste an jedem Ende des Roboters vorgesehen ist; und
Antriebsmittel für die Bürsten, die so vorgesehen sind, dass sie die Bürsten in zwei Richtungen antreiben können.

13. Roboter nach Anspruch 11 oder 12, wobei das Chassis (14) einen Tragrahmen für einen Korb (34) aufweist, wobei der Korb ein Steuermodul für den Roboter (10) sowie Batterien (37) umfasst, die zur Versorgung aller montierten Ausrüstungen bestimmt sind, insbesondere des Steuermoduls, des Antriebsaggregats und der Bürstenantriebsmittel; und wobei vorzugsweise die Reinigungsbürste/n am Chassis mittels wegnehmbarer Befestigungsmittel montiert ist/sind und der Korb wegnehmbar im Chassis angeordnet ist.

14. Roboter nach einem der Ansprüche 11 bis 13, wobei die Anzahl der Kufen der Gleiskette, ihre Abmessungen und das Verhältnis der Oberflächenhohlräume so bestimmt sind, dass der von den Kufen auf die Panels ausgeübte Druck unter etwa 5.000 Pa, insbesondere unter etwa 4.200 Pa liegt.

## Claims

1. A drive track for a vehicle moving on inclined surfaces, **characterized in that** it has a multilayer structure comprising:
- an inner layer (20) formed by a continuous strip having an inner face (20.1) capable of cooperating with means for driving the track;
- an intermediate layer (22) including a plurality of damping blocks (22.1) disposed over the entire length of the continuous strip of the inner layer with a predefined spacing (e);
- an outer running layer (24) coming into contact with the surface on which the track moves, the running layer being formed by pads (24.1) carried by the damping blocks (22.1);
wherein the damping blocks are made of an elastomer material having a hardness comprised between 60 and 80 degrees Shore A and have a cellular structure comprising a plurality of parallel through channels (22.2).

2. The track according to claim 1, wherein each damping block (22.1) has a parallelepiped shape, and supports, on a face parallel to the strip of the inner layer, a pad (24.1).

3. The track according to claim 1 or 2, wherein the cellular structure is of the honeycomb type and the channels (22.2) extend transversely to the length of the continuous strip, in particular perpendicularly.

4. The track according to any one of the preceding claims, wherein said predetermined spacing (e) corresponds to at least 5% or 20% of the thickness (d3) of a block, preferably at least 40 or 50% of the thickness of a block.

5. The track according to any one of the preceding claims, wherein the damping blocks (22.1) are made of an elastomer having a hardness comprised between 65 and 70 degrees Shore A.

6. The track according to any one of the preceding claims, wherein the pad (24.1) is substantially rectangular and extends across the width of the continuous strip of the inner layer.

7. The track according to any one of the preceding claims, wherein the pads have a contact surface with a plurality of open cavities (54) on the contact surface and forming a predetermined pattern, the surface cavity ratio being less than 50%.

8. The track according to claim 7, wherein the cavities (54) are formed in the thickness of the pad and delimited by a wall surface (54.1) and a bottom surface (54.2), each wall surface intersecting the contact face according to a closed ridge contour.

9. The track according to claim 8, wherein the cavities (54) have a depth of 2 mm or more and the area defined by the closed ridge contour is comprised between 12 and 80 mm², preferably between 16 and 36 mm².

10. The track according to any one of the preceding claims, wherein the pads (24.1) are made of an elastomer having a hardness in the range of 35 to 50 degrees Shore A, in particular between 40 and 45 degrees Shore A.

11. A robot, in particular for cleaning inclined surfaces, comprising:
a chassis (14) supporting a propulsion group;
a pair of traction tracks (12) according to one of claims 1 to 10, mounted on either side of the chassis for the displacement of the robot, the tracks being supported and driven by means for driving the track cooperating with the propulsion group; and
at least one brush (16) for cleaning the surface on which the robot moves.

12. The robot according to claim 11, comprising two rotary cleaning brushes (16), mounted transversely to the axis (L) of displacement of the robot, one brush at each end of the robot; and
brush drive means designed to drive the brushes in two directions.

13. The robot according to claim 11 or 12, wherein the chassis (14) forms a support frame for a basket (34), the basket comprising a robot control module (10) as well as batteries (37) intended to power all on-board equipment, in particular the control module, the propulsion group and the brush drive means; and preferably wherein the cleaning brush(es) is/are mounted on the chassis by removable fixing means, and the basket is removably housed in the chassis.

14. The robot according to one of claims 11 to 13, wherein the number of pads of the track, their dimensions and surface cavity ratio are determined such that the pressure applied by the pads on the panels is less than about 5000 Pa, in particular less than about 4200 Pa.
